# EUROPEAN PATENT APPLICATION

(11) **EP 4 819 672 A1**
(43) Date of publication of application: **07.10.2026**
(21) Application number: 24909859.1
(22) Date of filing: 16.08.2024
(51) Int. Cl.: H04W 24/04

(54) **CALL METHOD AND ELECTRONIC DEVICE**

(30) Priority: 28.12.2023 CN 202311849717; 22.03.2024 CN 202410341307
(71) Applicant: Honor Device Co., Ltd., Shenzhen, Guangdong 518040 (CN)
(72) Inventor: LI, Haibo, Shenzhen, Guangdong 518040 (CN)
(74) Representative: Goddar, Heinz J.
(86) International application number: PCT/CN2024/112918
(87) International publication number: WO 2025/138908

(57) **Abstract**

Embodiments of this application provide a method for a call and an electronic device, and relate to the field of communication technologies, resolving the problem that a cross-communication system is triggered due to relative weakening of a signal of a first network standard. The specific solution is: a UE receives RRC reconfiguration information from a first network device, where the RRC reconfiguration information includes a report condition corresponding to a target measurement event, the report condition is a condition that needs to be met by signal strength of a first signal and/or a second signal, the first signal is a radio signal sent by the first network device of a first network standard, and the second signal is a radio signal sent by a second network device of a second network standard; and when the first signal and/or the second signal detected by the UE meet the report condition, and a preset condition is met, the UE suppresses reporting of a measurement report of the target measurement event to the first network device, where the preset condition includes the signal strength of the first signal being greater than a first threshold.

## Description

This application claims priority to Chinese Patent Application No. 202311849717.9, filed with the China National Intellectual Property Administration on December 28, 2023 and entitled "METHOD AND APPARATUS FOR CALL", and Chinese Patent Application No. 202410341307.1, filed with the China National Intellectual Property Administration on March 22, 2024 and entitled "METHOD FOR CALL AND ELECTRONIC DEVICE", which are incorporated herein by reference in their entireties.

### TECHNICAL FIELD

This application relates to the field of communication technologies, and in particular, to a method for a call and an electronic device.

### BACKGROUND

With the development of the 5th generation (5th generation, 5G), an increasing number of services are based on the 5G technology. For example, a voice service is transmitted through a new radio (new radio, NR) air interface of the 5G technology. The language service transmitted through the NR air interface of the 5G technology may be referred to as voice over new radio (voice over new radio, VoNR).

During execution of a communication service (for example, a VONR call) by a user equipment (user equipment, UE), an NR signal is relatively weakening, and the UE may be redirected or handed over to LTE. In this process, communication service abnormalities may occur. For example, a call drop problem may occur.

### SUMMARY

Embodiments of this application provide a method for a call and an electronic device, to improve the quality of communication services.

To achieve the foregoing objective, the following technical solutions are used in the embodiments of this application:
According to a first aspect, an embodiment of this application provides a method for a call. The method includes:
receiving, by a UE, RRC reconfiguration information from a first network device.

For example, the RRC reconfiguration information includes a report condition corresponding to a target measurement event. The target measurement event may include one or more of an event B1 and an event B2. Each target measurement event corresponds to a report condition. In addition, the report condition is configured by the first network device and is reporting a measurement report meeting the target measurement event. In addition, the report condition may be a condition that needs to be met by signal strength of a first signal and/or a second signal. The first signal is a radio signal sent by the first network device of a first network standard, and the second signal is a radio signal sent by a second network device of a second network standard. The first network standard is superior to the second network standard.

When the first signal and/or the second signal detected by the UE meets the report condition, and a preset condition is met, the UE suppresses reporting of a measurement report of the target measurement event to the first network device. The preset condition includes the signal strength of the first signal being greater than a first threshold.

In the foregoing embodiment, when the UE recognizes that the report condition configured by the first network device is met currently, if it is detected that signal quality of the first network device can still support normal execution of a communication service, for example, the signal strength of the first signal is greater than the first threshold, the UE may suppress sending of the measurement report to the first network device, thereby avoid triggering handover of a network device that needs to be accessed, and also preventing the UE from handing over an accessed communication system.

Compared with immediately sending the measurement report to the first network device when the report condition is met, the method provided in the foregoing embodiment reduces the probability that the UE hands over a communication system and avoids the impact of cross-communication system on the communication service being executed currently while ensuring normal execution of the communication service.

In some embodiments, the preset condition may be the signal strength of the first signal being greater than the first threshold. In this way, in a scenario in which the first signal is relatively weakening or temporarily weakening, the preset condition can reduce the probability that the UE crosses communication systems while ensuring the normal execution of the communication service.

In some other embodiments, the preset condition may alternatively be that a target signal strength difference is less than or equal to a target threshold, where the target signal strength difference is a difference between the signal strength of the second signal and the signal strength of the first signal. The target signal strength difference being less than or equal to the target threshold may alternatively be replaced with the target signal strength difference being greater than the target threshold, where the target signal strength difference is a difference between the signal strength of the first signal and the signal strength of the second signal. In this way, when signal strength of an inter-system neighboring cell (second network standard) with a network standard lower than a network standard of the current serving cell is not significantly different from the signal strength of the serving cell (first network standard), communication system handover will not be triggered, ensuring that the communication service being executed is not affected. This also avoids the following situation: after the communication system handover, the communication quality is not improved.

In some other embodiments, the preset condition may alternatively be that: the signal strength of the first signal is greater than the first threshold, and the target signal strength difference is less than or equal to the target threshold. The target signal strength difference is a difference between the signal strength of the second signal and the signal strength of the first signal. In this way, when signal strength of an inter-system neighboring cell is not significantly different from signal strength of the serving cell, unnecessary communication system handover of the UE is avoided, ensuring that the communication service being executed is not affected.

In some embodiments, when the UE is executing a call service, the target threshold is a second threshold; or when the UE is not executing a call service, the target threshold is a third threshold. The second threshold is greater than the third threshold.

During execution of the call service, the UE increases a requirement for transitioning from a communication system of the first network standard to a communication system of the second network standard, to avoid a call drop. Certainly, during a period with no call services being executed, the probability that the UE transitions from a communication system of the first network standard to a communication system of the second network standard may also be reduced through the target threshold assigned to the third threshold, thereby avoiding unnecessary handover.

In some embodiments, the UE reports the measurement report of the target measurement event to the first network device when the first signal and/or the second signal detected by the UE meets the report condition, and the preset condition is not met; and the UE performs handover from the first network device of the first network standard to the second network device of the second network standard in response to handover indication information of the first network device.

Manners of not meeting the preset condition may include any one of the following:
The signal strength of the first signal is less than or equal to the first threshold.

The target signal strength difference is greater than the target threshold.

When the signal strength of the first signal is greater than the first threshold, the target signal strength difference is greater than the target threshold.

In some embodiments, the first network standard is NR, and the second network standard is LTE.

In some embodiments, a value of the first threshold is related to one or more of the following: current location information of the UE, travel information configured in the UE, a motion state of the UE, a band of the first network device, a band of the second network device, or a duplex mode enabled by the UE.

In some embodiments, a value of the second threshold is related to one or more of the following: the current location information of the UE, the travel information configured in the UE, the motion state of the UE, the band of the first network device, the band of the second network device, or the duplex mode enabled by the UE.

In some embodiments, a value of the third threshold is related to one or more of the following: the current location information of the UE, the travel information configured in the UE, the motion state of the UE, the band of the first network device, the band of the second network device, or the duplex mode enabled by the UE.

In the foregoing embodiments, the values of the first threshold, the second threshold, and/or the third threshold may be dynamically adjusted with changes of the scenario. The foregoing scenario may be indicated by one or more of the current location information of the UE, the travel information configured in the UE, the motion state of the UE, the band of the first network device, the band of the second network device, or the duplex mode enabled by the UE. In this way, by using the first threshold, the second threshold, and the third threshold, the accuracy of the decision on whether to transition to the second network device of the second network standard is higher.

In some embodiments, the target measurement event is an event B, and the event B is an event configured by the first network device for triggering handover to a different communication system.

For example, the event B may be the event B2. A report condition corresponding to the event B2 includes that: the signal strength of the detected first signal is less than a first threshold value, and the signal strength of the detected second signal is greater than a second threshold value. For example, the first threshold value is greater than the first threshold.

In some embodiments, before the receiving, by a UE, RRC reconfiguration information from a first network device, the method further includes: camping, by the UE, on a cell corresponding to the first network device.

According to a second aspect, an embodiment of this application provides a method for a call. The method includes: camping, by a UE, on a cell B of a first network standard; receiving, by the UE, an RRC reconfiguration message sent by a network side, where a report condition of an event B is configured in the RRC reconfiguration message; reporting, by the UE, a measurement report of the event B to the network side when a first condition is met, where the first condition includes that: a cell A of a second network standard meets the report condition of the event B, and a signal value of the cell B is less than or equal to a first threshold, where the first network standard is superior to the second network standard; reporting, by the UE, the measurement report of the event B to the network side when a second condition and a third condition are met; or suppressing, by the UE, reporting of the measurement report of the event B to the network side when the second condition is met but the third condition is not met, where the second condition includes that: the cell A meets the report condition of the event B, and the signal value of the cell B is greater than the threshold 1; and the third condition includes that: the UE is currently in a call service, and a difference between a signal value of the cell A and the signal value of the cell B is greater than a second threshold; or the UE is not currently in a call service, and the difference between the signal value of the cell A and the signal value of the cell B is greater than a third threshold, where the second threshold is greater than the third threshold.

According to a third aspect, an embodiment of this application provides an electronic device, including a processor and a memory. The memory stores computer-executable instructions, and the processor executes the computer-executable instructions stored in the memory, so that the electronic device performs the method according to the first aspect, the second aspect, and possible implementations thereof.

According to a fourth aspect, an embodiment of this application provides a chip system, including at least one processor and a communication interface. The communication interface and the at least one processor are interconnected through a line. The at least one processor is configured to run a computer program or instructions, to perform the method according to the first aspect, the second aspect, and possible implementations thereof.

According to a fifth aspect, an embodiment of this application provides a computer-readable storage medium, storing a computer program/instructions, the computer program/instructions, when executed by a processor, implementing the method according to the first aspect, the second aspect, and possible implementations thereof.

According to a sixth aspect, an embodiment of this application provides a computer program product, including a computer program/instructions, the computer program/instructions, when executed by a processor, implementing the method according to the first aspect, the second aspect, and possible implementations thereof.

It may be understood that the electronic device, the computer storage medium, and the computer program product provided in the foregoing aspects are all applicable to the foregoing corresponding method. Therefore, for beneficial effects that can be achieved by the electronic device, the computer storage medium, and the computer program product, reference may be made to beneficial effects in the foregoing corresponding method. Details are not described herein again.

### BRIEF DESCRIPTION OF DRAWINGS

FIG. 1 is a schematic diagram of a structure of a communication system according to an embodiment of this application;
FIG. 2 is an example diagram of a communication system that can realize a VoNR call according to an embodiment of this application;
FIG. 3 is an example diagram of steps of redirection or handover (handover, HO) from NR to LTE by a UE during a VoNR call;
FIG. 4 is a flowchart 1 of a method for a call according to an embodiment of this application;
FIG. 5 is a flowchart 2 of a method for a call according to an embodiment of this application;
FIG. 6 is a flowchart 3 of a method for a call according to an embodiment of this application;
FIG. 7 is an example diagram of a hardware structure of a UE according to an embodiment of this application; and
FIG. 8 is an example diagram of a software structure of a UE according to an embodiment of this application.

### DESCRIPTION OF EMBODIMENTS

Technical solutions in embodiments of this application are described below with reference to the accompanying drawings in the embodiments of this application. In the description of this application, unless otherwise specified, "at least one" means one or more, and "plurality" means two or more. In addition, to clearly describe the technical solutions of the embodiments of this application, in the embodiments of this application, words such as "first" and "second" are used to distinguish the same or similar items with functions and effects that are basically the same. Those skilled in the art may understand that the words "first", "second" and the like do not limit the quantity and execution order, and the words "first", "second" and the like are not limited to be necessarily different.

The technical solutions in the embodiments of this application may be applied to various communication systems, for example, a wireless fidelity (wireless fidelity, WiFi) system, a vehicle to everything (vehicle to everything, V2X) communication system, a device-to-device (device-to-device, D2D) communication system, a vehicle networking communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5G, for example, a new radio (new radio, NR) system, and future communication systems. In subsequent embodiments, the terms 4G and LTE may be used interchangeably, and the terms 5G and NR may be used interchangeably.

All aspects, embodiments, or features will be presented in this application by describing a system that may include a plurality of devices, components, modules, and the like. It should be appreciated and understood that, each system may include another device, component, module, and the like, and/or may not include all devices, components, modules, and the like described with reference to the accompanying drawings. In addition, a combination of these solutions may be used.

In addition, in the embodiments of this application, words such as "exemplary" and "example" are used to indicate instances, illustrations, or descriptions. Any embodiment or design solution described as an "example" in this application should not be explained as being more preferred or having more advantages than another embodiment or design solution. Exactly, use of the word "example" is intended to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of new service scenarios, the technical solutions provided in embodiments of this application are also applicable to similar technical problems.

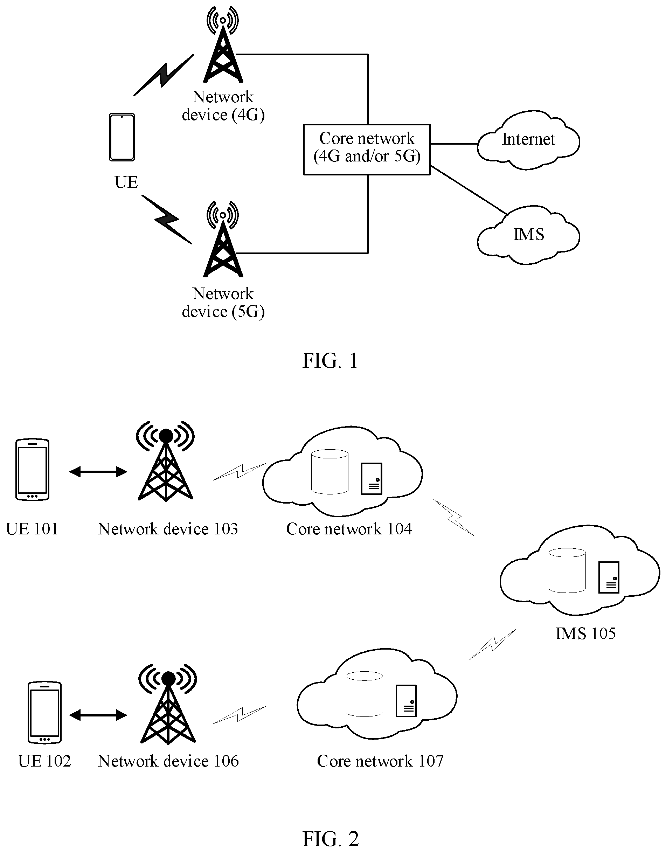

For ease of understanding the embodiments of this application, a communication system applicable to the embodiments of this application is first described in detail by using a communication system shown in FIG. 1 as an example. For example, FIG. 1 is a schematic diagram of an architecture of a communication system (or referred to as a network architecture) to which a communication method is applicable according to an embodiment of this application.

As shown in FIG. 1, the communication system mainly includes: a user equipment (user equipment, UE), a network device, a core network, an IP multimedia system (IP Multimedia Subsystem, IMS), or the Internet (Internet).

The UE may be a terminal device with receiving and transmitting functions, or a chip or a chip system that can be set in the terminal device. The UE may also be referred to as an access terminal, a subscriber unit (subscriber unit), a subscriber station, a mobile station (mobile station, MS), a mobile console, a remote station, a remote terminal, a mobile device, a terminal, a wireless communication device, a user agent, or a user apparatus.

The UE in the embodiments of this application may be a mobile phone (mobile phone), a cellular phone (cellular phone), a smart phone (smart phone), a tablet computer (Pad), a wireless data card, a personal digital assistant (personal digital assistant, PDA), a modem (modem), a handset (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, a road side unit (road side unit, RSU) having a terminal function, or the like. The terminal in this application may alternatively be an in-vehicle module, in-vehicle module, in-vehicle component, in-vehicle chip, or in-vehicle unit built into a vehicle as one or more components or units.

The network device is, for example, an access network (access network, AN) device, or may be referred to as a radio access network (radio access network, RAN) device. The RAN device may provide an access function for the UE, and be responsible for functions such as radio resource management on an air interface side, quality of service (quality of service, QoS) management, and data compression and encryption. The RAN device may include 5G, such as gNB in an NR system, or one or a group of (including a plurality of antenna panels) antenna panels of a base station in 5G, or may be a network node constituting a gNB, a transmission point (transmission and reception point, TRP or transmission point, TP), or a transmission measurement function (transmission measurement function, TMF), such as a building base band unit (building base band unit, BBU), a centralized unit (centralized unit, CU) or a distributed unit (distributed unit, DU), an RSU with a base station function, a wired access gateway, or a core network element of 5G. Alternatively, the RAN device may also include an access point (access point, AP) in a wireless fidelity (wireless fidelity, WiFi) system, a wireless relay node, a wireless backhaul node, a macro base station, a micro base station (also referred to as a small station), a relay station, an access point, a wearable device, an in-vehicle device, and the like in various forms. Alternatively, the RAN device may also include a next-generation mobile communication system, for example, an access network device of 6G, for example, a 6G base station, or in next-generation mobile communication system, the network device may have other naming manners, all of which fall within the protection scope of the embodiments of this application, and no limitation is imposed on this in this application.

The core network provides a user connection, manages a user, completes service bearing, and serves as a bearer network to provide an interface to an external network. Establishment of the user connections includes functions such as mobility management (MM), call management (CM), switching/routing, and recording notification (completing a relationship of connecting to a peripheral device of an intelligent network by combining a service of the intelligent network).

It may be understood that, a core network of a 4G network is an evolved packet core (Evolved Packet Core, EPC) network. The EPC network is a core network of a 4G mobile communication network. The EPC network belongs to a core network, has conventional capabilities of a mobile network, such as user subscription data storage, mobility management, and data exchange, and provides ultra-high-speed Internet access experience for users. A core network of a 5G network is a 5G core (5GC for short). The 5GC replaces a dedicated communication device in the 4G network with a general network function virtualization device.

It is to be noted that, the core network shown in FIG. 1 may refer to a core network of a 4G (for example, LTE) network standard, a core network of a 5G (for example, NR) network standard, or a core network that integrates the 4G (for example, LTE) network standard and the 5G (for example, NR) network standard, for example, a core network obtained by integrating EPC and 5GC. That is, the core network in the network architecture can include network elements in both the EPC and the 5GC. For example, the core network in the network architecture may include an access and mobility management function (Access and Mobility Management Function, AMF) network element, a mobility management entity (Mobility Management Entity, MME) network element, a serving gateway (Serving GateWay, SGW) network element, a packet data network gateway (Packet Data Network GateWay, PGW) network element, a session management function (Session Management Function, SMF) network element, a user plane function (User Plane Function, UPF) network element, and a unified data management function (Unified Data Management, UDM) network element, home subscriber server (such as Home Subscriber Server, HSS) network element, and the like.

In this way, the UE may access the core network through a network device of NR, or access the core network through a network device of LTE.

For example, the core network in the communication system may include a network element obtained by integrating a network element in the EPC and a network element in the 5GC, for example, an SMF+PGW-C, a UPF+PGW-U, and a UDM+HSS. PGW-C is a control plane node of the PGW network element, and PGW-U is a user plane node of the PGW network element.

For example, the core network may include a proxy session border control (Proxy Session Border Control, PSBC) network element, which is a network element integrating a session border control (Session Border Control, SBC), a proxy call session control function (Proxy-CSCF, P-CSCF), an access transfer control function (Access Transfer Control Function, ATCF), and an access transfer gateway (Access Transfer Gateway, ATGW). An SBC network element connects an IMS core network/a softswitch network to an external user access area, completes service access for IMS/softswitch users, implements interworking of user services in different network environments, ensures IMS/softswitch network security, and supports functions such as QoS management, CAC call admission control, media management, and CDR media call detail record.

Each network element in the core network may also be referred to as a functional entity, and may be a network element implemented on dedicated hardware, or a software instance running on the dedicated hardware, or a virtualized function instance on an appropriate platform.

It should be understood that names of all network elements in this application are merely examples. In future communication, for example, 6G, the network element may be referred to as another name, or in future communication, for example, 6G, the network element in this application may alternatively be replaced with another entity, a device, or the like having a same function. This is not limited in this application. This is uniformly described herein, and details are not described below again. Optionally, the network elements in embodiments of this application may be communication devices, or may be chips, chip systems, or the like that may be used in the communication devices. This is not limited in embodiments of this application.

It may be understood that, the core network may further include another device, network element, network entity, or network subsystem, for example, a policy control function (Policy Control function, PCF) network element. This is not limited in this application. It is to be noted that, a distribution manner of the network elements in the core network is not limited in this application. For details about the distribution manner, refer to a related technical document. Details are not described herein in this application.

IMS is an architecture that provides voice and multimedia communication services (for example, voice, video, and text message) based on an Internet protocol (Internet Protocol, IP) network. The IMS can implement secure and reliable multimedia communication between different devices. An architectural model provides a same infrastructure and a general mechanism for controlling, operating, routing, and managing sessions, and for implementing authentication, authorization, and accounting control. The IMS specification includes widely used internet engineering task force (The Internet Engineering Task Force, IETF) recommendations, for example, a session initiation protocol (Session initialization Protocol, SIP) used for session control signaling.

The Internet generally means the Internet, also referred to as an international network, and means a vast network formed by interconnected networks. These networks are connected by using a set of general protocols, to form a logically single giant international network. From the perspective of network communication, the internet is a data communication network that connects computer networks of various countries, regions, and institutions around the world by using the transmission control protocol (Transmission Control Protocol, TCP)/internet protocol (Internet Protocol, IP).

It may be understood that FIG. 1 is a simplified schematic diagram as an example for ease of understanding only. The communication system may also include other network devices and/or other UEs, which are not shown in FIG. 1.

In some embodiments, the UE in the foregoing communication system may access, through a network device, a communication system corresponding to the network device. In this way, the UE may execute various communication services based on the accessed communication system. For example, the communication services may include a call service and a network data transmission service (or referred to as an Internet access service).

In some embodiments, when connecting to network devices of different network standards, the UE may execute various communication services based on communication systems of different standards.

For example, after the UE accesses, through a network device of a first network standard (for example, NR), a communication system of the first network standard, the UE may execute a call service, for example, a voice over NR (VoNR) call, based on the communication system of the first network standard.

In another example, after the UE accesses, through a network device of a second network standard (for example, LTE), a communication system of the second network standard, the UE may execute a call service, for example, a voice over LTE (VoLTE) call, based on the communication system of the second network standard.

It may be understood that, the first network standard and the second network standard refer to two different network standards, and are not limited to NR or LTE. The first network standard or the second network standard may also refer to a network standard corresponding to a future communication system (for example, 6G). This is not specifically limited in the embodiments of this application. In addition, the first network standard is superior to the second network standard. For example, the first network standard is 5G, and the second network standard is 4G.

In some embodiments, during normal operation, the UE may select a network device that needs to be accessed. For example, the UE may monitor a radio signal from a network device. Subsequently, the UE evaluates, according to the detected radio signal, signal quality corresponding to the network device sending the radio signal. The radio signal may be a synchronization signal and channel state information from the network device. After the radio signal is detected, a reference signal received power (reference signal received power, RSRP), received signal strengthindicator (received signal strengthindicator, RSSI), reference signal receiving quality (reference signal receiving quality, RSRQ), and a signal to interference plus noise ratio (signal to interference plus noise ratio, SINR) corresponding to the network device may be evaluated. For specific implementation details, reference may be made to the related art, and details are not described herein again. Subsequently, the UE evaluates the signal quality corresponding to the network device according to a value of one or more of the detected RSRP, RSSI, RSRQ, and SINR. Subsequently, the UE selects a network device with the best signal quality and accesses the network device.

It may be understood that, the radio signal sent by the network device attenuates during propagation, and the signal coverage of the network device is limited. An area in which the radio signal sent by the network device can be received may be referred to as a service range of the network device. Only UEs located within the service range of the network device can request access to the network device.

In addition, the service range of the network device may be divided into at least one cell. When the network device includes a plurality of base stations, signal coverages of different base stations may differ or overlap. In addition, each cell of the network device corresponds to a signal coverage of one base station. Different cells may correspond to different base stations or the same base station, and this is not specifically limited.

In this embodiment of this application, the network device and the cell may be used interchangeably. A UE camping on a cell may be understood as the UE establishing a connection with a network device corresponding to the cell and maintaining a connection state. During a period in which the UE camps on the cell, the UE may access a corresponding communication system through the network device corresponding to the cell and execute a communication service.

Because during propagation of the radio signal, the signal attenuates with an increase of the propagation distance. In this way, signal quality varies at different locations within the cell corresponding to the network device. In addition, the cell corresponding to the network device may also change, for example, change due to environmental factors or change due to the operating power.

In this scenario (for example, a location of a user of the UE changes or a cell range of the network device changes), the UE may trigger a handover to an accessed cell to ensure communication quality.

For example, during idle periods of the UE, the UE may hand over between cells of different network standards according to communication quality of the cells. During execution of some communication services (for example, an Internet access service), the UE may also hand over between cells of different network standards according to communication quality of the cells. During execution of some other communication services (for example, a call service) by the UE, the UE may hand over from a cell of the first network standard to a cell of the second network standard, but may not hand over from a cell of the second network standard to a cell of the first network standard. The first network standard is superior to the second network standard.

The first network standard being NR, and the second network standard being LTE is used as an example. During a period in which the UE camps on an NR cell, the UE may execute a voNR call service in response to a user operation. As shown in FIG. 2, a UE101 camps on an NR cell B, and the cell B corresponds to network device 103 of an NR network. An example in which the UE101 is a calling device (that is, a terminal initiating a call) and a UE102 is a called device (that is, a device answering the call) is used, to describe the process in which the UE101 actively initiates a VoNR call to the UE102:
(1) The UE101 requests to establish a radio resource control (Radio Resource Control, RRC) connection with the network device 103. In this way, the UE101 may access a core network 104 through the network device 103.
(2) In response to a user operation, the UE101 may send call request information to the core network 104 through the network device 103. The call request information carries an identifier of the UE102 (for example, a telephone number).
(3) The UE101 may establish a default bearer corresponding to a quality of service class identifier (quality of service class identifier, QCI) 9 and a session initiation protocol (session initiation protocol, SIP) signaling bearer corresponding to QCI5.

For example, after the default bearer corresponding to QCI9 and the SIP signaling bearer corresponding to QCI5 are established, bearer information mapped from NR to LTE may also be maintained in the UE101.

For example, the bearer information includes a correspondence between QCI9 and "bearer identifier (eps_bearer_id, EBI)=6". This correspondence indicates a bearer corresponding to EBI6, configured for transmitting data related to the Internet access service.

In another example, the bearer information includes: a correspondence between QCI5 and "EBI=5". This correspondence indicates a bearer corresponding to EBI5, configured for transmitting SIP signaling.

In addition, the core network 104 may be communicatively connected to an IMS 105.
(4) After receiving the call request information from the UE 101, the core network 104 may also send a response message to the UE 101 through the network device 103, indicating that the core network 104 is processing the calling initiated by the UE 101. In addition, the core network 104 may also send the call request information to the UE102 through the IMS 105, to implement paging the UE102.
(5) The UE102 establishes an RRC connection with a network device 106 and accesses a corresponding core network 107 through the network device 106. In this way, the UE102 may receive paging from the IMS105, for example, the call request information from the UE101.

For example, after the UE102 receives the call request information, the UE102 and the UE101 conduct SIP session negotiation through the IMS105, for example, negotiating information such as an encoding manner, an IP address, and a port number.

(6) After the negotiation is completed, the UE101 may also establish a QCI1 data radio bearer for transmitting multimedia data such as audio and video. The UE102 may also establish a QCI1 data radio bearer for transmitting multimedia data such as audio and video.

After the QCI1 data radio bearer is created, the bearer information mapped from NR to LTE maintained in the UE101 further includes a correspondence between QCI1 and "EBI=7". The correspondence indicates a bearer corresponding to EBI7, configured for transmitting voice data. The same applies to the UE102, and details are not described herein again.

(7) Subsequently, the UE102 may notify the user of receiving of an incoming call from the UE101 in manners such as ringing and displaying. After the UE102 detects an operation of answering the incoming call by the user, the UE101 and the UE102 may transmit voice data through the corresponding 5G system and the IMS105, to start a VONR call.

It may be understood that, the foregoing steps (1) to (7) are a simplified example. In the specific implementation, during the VONR call between the UE101 and the UE102, there may be more or less signaling interaction. Reference may be made to the relevant standards, and details are not described herein again.

In brief, through the foregoing steps (1) to (7), the UE101 and the UE102 first respectively establish corresponding bearers, and then establish an IMS session based on the established bearers. It may be understood that, the bearer is established between the UE and a packet data network (Packet Data Network, PDN). The bearers in the embodiments of this application include a default bearer and a dedicated bearer. The default bearer includes a bearer with QCI=5, configured to bear control signaling and the like during calling and calls. The dedicated bearer includes a bearer with QCI=1, configured to meet a quality of service (quality of service, QoS) requirement of multimedia data transmitted between the UE101 and the UE102, and configured to bear voice packets and/or video streams on a media plane.

In some embodiments, during a VONR call, the NR cell on which the UE camps may instruct the UE to hand over (handover, HO) from NR to LTE. For example, a radio signal received by the UE from the NR cell is weakening, triggering the UE to redirect or HO to LTE. In other words, the UE hands over from an NR communication system to an LTE communication system. The process involves cross-system and has a call drop risk.

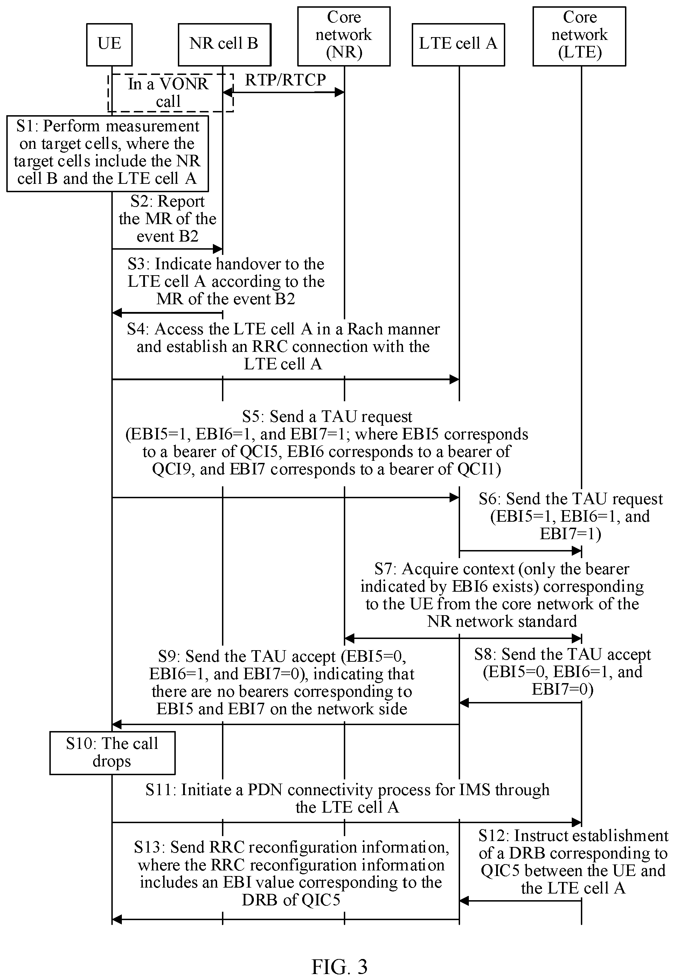

As shown in FIG. 3, the UE accesses the NR communication system through the NR cell B (which may also be referred to as a cell B for short) and executes a VONR call based on the NR communication system. During execution of the VONR call, the UE transmits voice data to the NR core network through the NR cell B according to a real-time transport protocol (real-time transport protocol, RTP)/real-time transport control protocol (real-time transport control protocol, RTCP). During the VONR call, the process of redirection or HO from NR to LTE by the UE is as follows:
S1: The UE may perform measurement on target cells, where the target cells include the NR cell B and an LTE cell A.

The target cells include the UE's current serving cell and a corresponding neighboring cell. The serving cell is a cell on which the UE camps, for example, the NR cell B in FIG. 3. The neighboring cell is a cell with a coverage overlapping with a coverage of the serving cell, for example, the LTE cell A in FIG. 3 (which may also be referred to as a cell A for short), which, certainly, may alternatively include a cell not shown in FIG. 3.

In some examples, the neighboring cell and the serving cell use the same network standard, which may also be referred to as that the serving cell and the neighboring cell are in the same system. The neighboring cell and the serving cell may alternatively use different network standards, which may also be referred to as that the serving cell and the neighboring cell are in different systems. In addition, in FIG. 3, a network device corresponding to the NR cell B is a first network device using the first network standard (NR), and a network device corresponding to the LTE cell A is a second network device using the second network standard (LTE).

In some embodiments, after the UE accesses the NR cell B, that is, when the NR cell B is the serving cell, RRC reconfiguration information from the NR cell B may be received. The RRC reconfiguration information includes neighboring cell frequency points. The neighboring cell frequency points are frequency points corresponding to neighboring cells of the NR cell B. For example, the LTE cell A is a neighboring cell of the NR cell B, and the neighboring cell frequency points in the RRC reconfiguration information include a frequency point corresponding to the LTE cell A.

In some embodiments, the UE may perform measurement on the target cells based on a frequency point of the serving cell and neighboring cell frequency points under a preset condition. For example, the preset condition may be that a measurement cycle is configured within the UE, and the system time reaches a detection time point of each detection cycle.

In addition, the UE's measurement on the target cells may be measuring signal conditions of the target cells, and for a specific process, reference may be made to the related art. For example, the UE detects a radio signal sent by the LTE cell A on the frequency point corresponding to the LTE cell A, and acquires an RSRP, an RSSI, an RSRQ value, and/or an SINR value corresponding to the LTE cell A based on the radio signal from the LTE cell A, to realize the measurement on the NR cell B. In another example, the UE may also monitor a radio signal sent by the NR cell B on the frequency point corresponding to the NR cell B, and acquires an RSRP, an RSSI, an RSRQ, and/or an SINR, and the like corresponding to the NR cell B based on the radio signal from the NR cell B, to realize the measurement on the NR cell B.

It may be understood that, after the foregoing measurement, the UE may obtain measurement results corresponding to the target cells. For example, the measurement results include measurement values representing signal quality, such as the RSRPs, RSSIs, RSRQs, and/or SINRs corresponding to the NR cell B and the LTE cell A. In possible embodiments, the measurement results may further include physical distances between the UE and the NR cell B and the LTE cell A, and the like.

When the measurement result indicates that the target cell meets a report condition corresponding to a pre-configured measurement event, the UE generates a corresponding measurement report (measurement report, MR) and reports the measurement report to the NR cell B.

For example, signal strength and/or signal quality corresponding to the target cell may be recorded in the MR. For example, the signal strength may be the RSRP of the target cell, and the signal quality may be a value evaluated by the UE based on the RSRP, RSSI, RSRQ, and/or SINR of the target cell. Alternatively, the signal quality may be indicated by the RSRP, RSSI, RSRQ, and/or SINR. In some embodiments, the pre-configured measurement event and the corresponding report condition in the UE are from the serving cell (for example, the NR cell B). For example, after the UE accesses the NR cell B, the received RRC reconfiguration information may further include a measurement event and a report condition. For example, the measurement event may include: an event A3, an event A2, an event B1, an event B2, and the like. The event A3 and the event A2 are measurement events for neighboring cells in the same network as the serving cell, and may be referred to as events A. The event B1 and the event B2 are measurement events for neighboring cells in networks different from the network of the serving cell, and may be referred to as events B.

The event A3 (Event A3) indicates that signal strength (or quality) of a neighboring cell in the same/different system is higher than signal strength (or quality) of the serving cell by a certain threshold, for example, 3 dbm.

For example, the NR cell B is the serving cell, and neighboring cells of the NR cell B include the NR cell C. When the measurement result indicates that a reference signal receiving power (Reference Signal Receiving Power, RSRP) value of the NR cell C is 3 dbm higher than the RSRP of the NR cell B, it is determined that the NR cell C meets a report condition of the event A3, and an MR of the event A3 may be generated based on the measurement result. The event A2 (Event A2) means that signal quality of the serving cell is lower than a certain threshold. For example, the NR cell B is the serving cell, and when the measurement result indicates that the RSRP of the NR cell B is lower than a corresponding threshold, it is determined that the NR cell B meets a report condition of the event A2, and an MR of the event A2 may be generated based on the measurement result.

The event B1 (Event B1) means that signal quality of an inter-system neighboring cell is higher than a certain threshold. For example, the NR cell B is the serving cell, and the LTE cell A is an inter-system neighboring cell of the NR cell B. When the measurement result indicates that the RSRP of the LTE cell A is higher than a corresponding threshold, it is determined that the LTE cell A meets a report condition of the event B1, and an MR of the event B1 may be generated based on the measurement result.

The event B2 (Event B2) indicates that quality of a serving cell is lower than a certain threshold and/or quality of an inter-system neighboring cell is higher than a certain threshold. For example, if the NR cell B is the serving cell, and the LTE cell A is the neighboring cell. When the measurement result indicates that the RSRP of the NR cell B is lower than the corresponding threshold and/or the RSRP of the LTE cell A is higher than the corresponding threshold, it is determined that the LTE cell A meets the report condition of the event B2, and an MR of the event B2 may be generated based on the measurement result.

In addition, the RSRP of the NR cell B may indicate signal strength of a first signal detected by the UE from the first network device. The RSRP of the LTE cell A may indicate signal strength of a second signal detected by the UE from the second network device.

In subsequent embodiments, the LTE cell A meeting the report condition of the event B2 is used as an example for description. In the event B2, the serving cell corresponds to a threshold value 1, and the inter-system neighboring cell corresponds to a threshold value 2.

S2: The UE reports the MR of the event B2 to the NR cell B.

The MR of the event B2 includes: the RSRP of the NR cell B being lower than the threshold value 1, and the RSRP of the LTE cell A being higher than the threshold value 2. The MR of the event B2 may indicate that the UE has detected that a signal of the NR cell B is weakening and a signal of the LTE cell A is strengthening. In some embodiments, the threshold value 1 corresponding to the NR cell B may be less than the threshold value 2 of the LTE cell A.

S3: The NR cell B instructs, according to the MR of the event B2, the UE to hand over to the LTE cell A.

S4: The UE accesses the LTE cell A in a random access (random access, Rach) manner and establishes a radio resource control (Radio Resource Control, RRC) connection with the LTE cell A.

In some embodiments, for the foregoing process of Rach to the LTE cell A and establishing the RRC connection between the UE and the LTE cell A, reference may be made to the related art, and details are not described herein again.

S5: After the RRC connection is established, the UE sends a tracking area update (tracking area update, TAU) request to the LTE cell A.

It may be understood that, the handover of the UE from the NR cell B to the LTE cell A involves cross-communication system. According to relevant rules, a TAU process needs to be performed, that is, S5 is performed. The TAU request may also be referred to as a TAU request, and the TAU request may include information indicating bearers that have been activated currently. For example, during a VONR call performed by the UE based on the NR cell B, bearers indicated by EBI6, EBI5, and EBI7 have been activated, where EBI6 corresponds to the bearer of QCI9, EBI5 corresponds to the bearer of QCI5, and EBI7 corresponds to the bearer of QCI1. Accordingly, the TAU request carries eps_bearer_context_status. eps_bearer_context_status may be EBI5=1, EBI6=1, and EBI7=1. EBI5=1 indicates that the bearer indicated by EBI5 is in an active state. The others are the same, and details are not described again.

S6: The LTE cell A sends the TAU request from the LTE cell A to an LTE core network.

S7: The LTE core network acquires context (context) corresponding to the UE from the NR core network.

The LTE core network and the NR core network may be different networks or different network elements within the same network. This is not specifically limited in this embodiment of this application.

In addition, the context includes bearers that have been activated of the UE recorded by the NR core network. In an actual operation scenario, the bearers having been activated indicated by the context may differ from the bearers having been activated indicated in the TAU request. For example, the context indicates that only the bearer corresponding to EBI6 exists, and the bearers corresponding to EBI5 and EBI7 do not exist. That is, the context indicates that in the UE, the bearer corresponding to EBI6 has been activated, and the bearers corresponding to EBI5 and EBI7 have not been activated. Accordingly, the process can proceed to S8.

S8: The LTE core network sends a TAU accept (TAU accept) to the LTE cell A.

The TAU accept carries eps_bearer_context_status. The LTE core network may configure eps_bearer_context_status to EBI5=0, EBI6=1, and EBI7=0 according to the context from the NR core network. EBI5=0 indicates that the bearer corresponding to EBI5 has not been activated, EBI7=0 indicates that the bearer corresponding to EBI7 has not been activated, and EBI6=1 indicates that the bearer corresponding to EBI6 has been activated.

S9: The LTE cell A sends the TAU accept (EBI5=0, EBI6=1, and EBI7=0) to the UE, indicating that there are no bearers corresponding to EBI5 and EBI7 on the network side.

The bearer corresponding to EBI5 refers to a logical transmission channel corresponding to QCI5. The bearer corresponding to EBI7 refers to a logical transmission channel corresponding to QCI1.

S10: After the UE receives the TAU accept, a call drop occurs.

In some embodiments, the TAU accept may indicate that no IMS bearers exist on the network side. For example, the IMS bearers include the bearer corresponding to EBI5 and the bearer corresponding to EBI7. If there is no bearer corresponding to EBI7 on the network side, the bearer configured to transmit voice data (that is, EBI7) is lost. In this scenario, a problem of no sound will occur during the call. If there is no bearer corresponding to EBI5 on the network side, the bearer configured to transmit SIP signaling (that is, EBI5) is lost. In this scenario, a problem of a call drop will occur during the call.

In other embodiments, when the TAU accept received by the LTE cell A is inconsistent with the TAU request from the UE, the LTE cell A may also not send the TAU accept to the UE, or send response information indicating rejection of the TAU request, causing a call drop to the UE.

S11: The UE requests, through the LTE cell A, the LTE core network to initiate a PDN connectivity process for IMS.

In some embodiments, the UE sends a PDN connectivity request (PDN connectivity request) for IMS to the LTE core network through LTE cell A.

S12: The LTE core network instructs establishment of a data resource bearer (data RB, DRB) corresponding to QCI5 between the UE and the LTE cell A.

In some embodiments, in response to the PDN connectivity request, the LTE core network establishes a corresponding logical transmission channel between the LTE cell A and the LTE core network. Subsequently, the LTE core network may send an activate default EPS bearer context request Activate default EPS bearer context request to the UE through the LTE cell A, instructing the establishment of a DRB corresponding to QCI5 between the UE and the LTE cell A.

S13: The LTE cell A sends RRC reconfiguration information to the UE, where the RRC reconfiguration information includes an EBI value corresponding to the DRB of QCI5.

For example, the EBI value assigned to the DRB of QCI is 5, and the RRC reconfiguration information includes the correspondence between QCI5 and EBI5.

Subsequently, when the UE executes a call service again in a response to the user's operation, a bearer corresponding to QCI1 may be created.

It can be seen that during the UE's transition from NR to LTE, bearer loss may occur, leading to abnormalities in the communication services (such as a call service or an Internet access service) being executed.

In addition, under the current commercial network of the operator, if the UE transitions from NR to LTE during execution of a call service, the UE cannot hand over back from LTE to NR before the call ends.

A scenario in which the user travels on a high-speed train with a mobile phone (UE) is used as an example. On the high-speed train route, NR signal coverage conditions are better than LTE signal coverage conditions in most road sections, that is, 5G signal strength is higher than 4G signal strength. In a small number of road sections, the NR signal coverage conditions are worse than the LTE signal coverage conditions, that is, the 5G signal strength is lower than the 4G signal strength.

During traveling of the high-speed train, the mobile phone is executing a VONR call in response to a user operation. During execution of the VONR call, if the mobile phone travels with the high-speed train through a road section with relatively weak 5G signal strength, the mobile phone's serving cell changes from an NR cell to an LTE cell. In other words, the call service executed by the mobile phone is handed over from a VONR call to a VOLTE call. Subsequently, even if the mobile phone enters a road section in which a 5G signal is stronger than a 4G signal with the high-speed train, the mobile phone cannot hand over back to NR before the call ends, consequently affecting the call quality.

To improve the foregoing problem, an embodiment of this application provides a method for a call, applied to a UE. During UE operation, if an MR meeting an event B2 is generated and it is detected that an NR signal is strong, the UE is suppressed from reporting the MR meeting the event B2, reducing the probability that the UE transitions from NR to LTE, and avoiding occurrence of a call drop and impact on call quality.

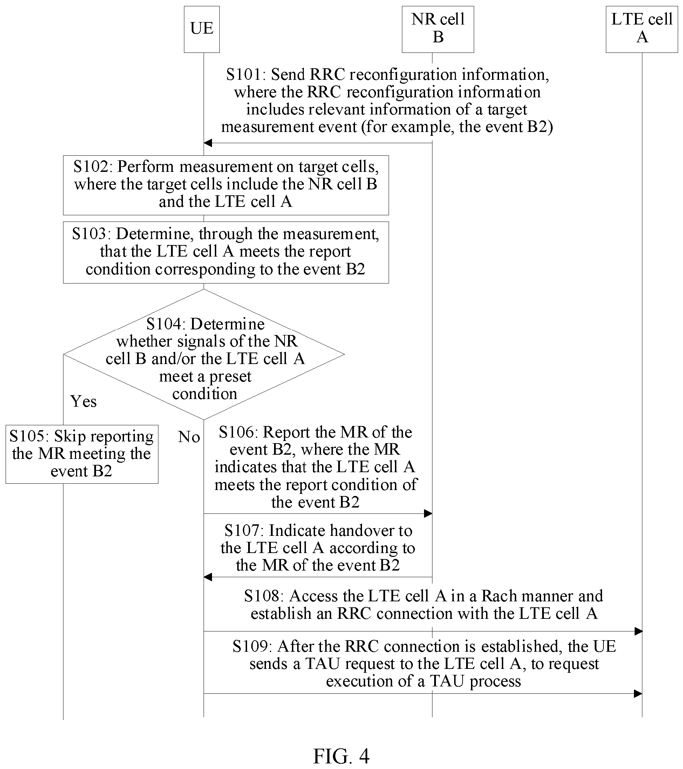

In some embodiments, as shown in FIG. 4, the UE is located within the coverage of the NR cell B and the LTE cell A, and the UE accesses the NR cell B, that is, when the NR cell B is the serving cell of the UE, the foregoing method may include:

S101: The NR cell B sends RRC reconfiguration information to the UE, where the RRC reconfiguration information includes relevant information of a target measurement event (for example, the event B2).

The target measurement event may include one or more of an event A3, an event A2, an event B1, and an event B2. In subsequent embodiments, the event B2 is mainly used as an example for description. The relevant information of the target measurement event includes a type of the target measurement event and threshold values involved in the measurement event, for example, a threshold value 1 and a threshold value 2 corresponding to the event B2.

In addition, the RRC reconfiguration information may also include neighboring cell frequency points. The neighboring cell frequency points may indicate a frequency point of a neighboring cell corresponding to the current serving cell.

In some embodiments, in the RRC reconfiguration information, there may be a correspondence between the neighboring cell frequency points and the target measurement events. In other words, the neighboring cell of the NR cell B (for example, the LTE cell A) may correspond to one or more types of target measurement events. For example, the LTE cell A corresponds to the event B2. In this way, after measuring the LTE cell A and the NR cell B, the UE needs to determine whether the LTE cell A meets the event B2. For details, reference may be made to S102 and S103 in the subsequent embodiments.

S102: The UE performs measurement on target cells, where the target cells include the NR cell B and the LTE cell A.

The NR cell B is the serving cell, and the LTE cell A is a neighboring cell of the NR cell B. The neighboring cell frequency points in the RRC reconfiguration information from the NR cell B include a frequency point of the LTE cell A.

In some embodiments, for implementation details of S102, reference may be made to S1 in the foregoing embodiments, and details are not described herein again. Through the foregoing measurement, corresponding measurement results may be obtained. For example, the measurement result may include an RSRP, RSSI, RSRQ, and/or SINR corresponding to the target cell.

S103: The UE determines, through the measurement, that the LTE cell A meets the report condition of the event B2.

In the measurement result, the RSRP of the NR cell B is lower than the corresponding threshold value 1 and/or the RSRP of the LTE cell A is higher than the corresponding threshold value 2, and it indicates that the signal strength of the NR cell B on which the UE camps is weakening and/or the signal strength of the LTE cell A is strengthening. The UE may determine, through the measurement, that the LTE cell A meets the report condition of the event B2. When it is determined that the LTE cell A meets the report condition of the event B2, the process proceeds to S104.

When it is determined that the LTE cell A does not meet the report condition of the event B2, the process ends, and the UE continues to perform measurement on the target cells.

S104: The UE determines whether signals of the NR cell B and/or the LTE cell A meet a preset condition.

Different from the related art, after the UE determines that the LTE cell A meets the event B2, the UE needs to continue to determine whether the signals from the NR cell B and/or the LTE cell A meet the preset condition.

The preset condition is a condition configured for evaluating whether the UE needs to hand over a communication system currently. The handing over a communication system may refer to handover from an NR cell to an LTE cell. When the preset condition is met, the process proceeds to S105; or when the preset condition is not met, the process proceeds to S106.

In some embodiments, the preset condition may be configured from the perspectives of whether the current NR cell for camping can support the normal operation of the UE, whether the LTE neighboring cell is significantly better than the current NR cell for camping, and the like. For example, the preset condition may include one or more of the following:
1) The signal strength/or signal quality of the NR cell B is greater than a threshold 1.
2) The target signal strength difference is less than or equal to the target threshold.

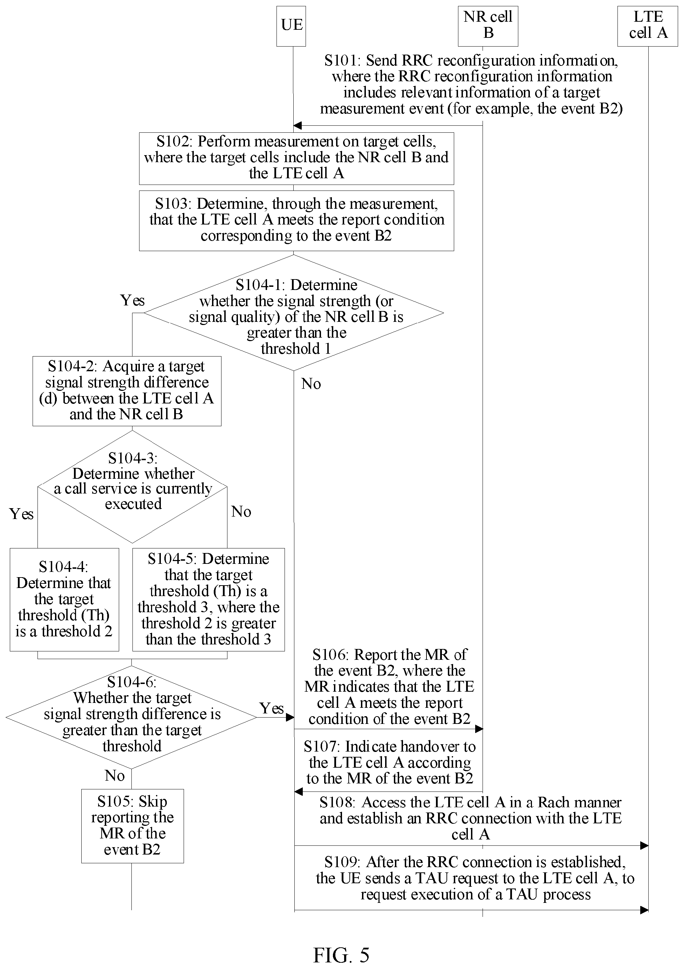

When the preset condition includes one or more of the above, the determining order for the various preset conditions is not specifically limited. The preset condition including two of the above is used as an example below. As shown in FIG. 5, the foregoing S104 may include the following steps S104-1 to S104-6:
S104-1: The UE determines whether the signal strength (or signal quality) of the NR cell B is greater than the threshold 1.

In some embodiments, the signal strength of the NR cell B may refer to the RSRP of the NR cell B measured by the UE. S104-1 may be that the UE determines whether the RSRP of the NR cell B is greater than the threshold 1 (first threshold). The threshold 1 may be an empirical value. When the signal strength of the serving cell is less than or equal to the threshold 1, the UE cannot execute various communication services (such as a call service and an Internet access service) normally/with high quality through the serving cell. When the signal strength of the serving cell is greater than the threshold 1, the UE can still execute various communication services normally through the serving cell.

In summary, the threshold 1 may be configured for evaluating whether the serving cell can be used normally. Generally, the threshold 1 is less than the threshold value 1 configured for the serving cell. Certainly, in some scenarios, the threshold 1 may be greater than or equal to the threshold value 1 configured for the serving cell. This is not specifically limited in this embodiment of this application.

In some other embodiments, the signal quality of the NR cell B may refer to an evaluation value obtained based on the RSRP, RSSI, RSRQ, and SINR of the NR cell B measured by the UE. S104-1 may be that the UE determines whether the evaluation value is greater than the threshold 1 (first threshold). It may be understood that, the threshold 1 for the signal strength and the threshold 1 for the signal quality may be different values, and certainly, may both be empirical values.

In subsequent embodiments, a description is provided mainly by comparing the signal strength of the NR cell B with the threshold 1. For example, when the signal strength of the NR cell B is greater than the threshold 1, the process proceeds to S104-2. When the signal strength of the NR cell B is less than or equal to the threshold 1, the process proceeds to S106.

S104-2: The UE acquires a target signal strength difference (d) between the LTE cell A and the NR cell B.

For example, the target signal strength difference may be a difference between the RSRP of the LTE cell A and the RSRP of the NR cell B, and may be denoted as d.

In some embodiments, when the signal strength of the NR cell B is greater than the threshold 1, the UE may subtract the RSRP of the NR cell B from the RSRP of the LTE cell A, to obtain the corresponding target signal strength difference (d).

S104-3: The UE determines whether a call service is currently executed.

If the UE is executing a call service, the process proceeds to S104-4. If the UE is not executing a call service, the process proceeds to S104-5.

S104-4: The UE determines that the target threshold (Th) is a threshold 2.

S104-5: The UE determines that the target threshold is a threshold 3, where the threshold 2 is greater than the threshold 3.

The target threshold may be configured for measuring whether it is necessary for the UE to hand over from NR to LTE currently. It may be understood that, a higher target threshold indicates a higher requirement for handover from NR to LTE. A lower target threshold indicates a lower requirement for handover from NR to LTE. In this embodiment of this application, the target threshold may be a dynamic value, and a value of the target threshold may differ in different application scenarios.

For example, the value of the target threshold differs between a call scenario and a non-call scenario. That is, the threshold 2 (second threshold) and the threshold 3 (third threshold) may also be different empirical values. In this way, during execution of a call service, the UE increases the requirement for handover from NR to LTE, to avoid a call drop. Certainly, during a period with no call services being executed, the probability that the UE hands over from NR to LTE may also be reduced through the target threshold assigned to the threshold 3, thereby avoiding unnecessary handover.

After the UE performs S104-4 or S104-5, the process proceeds to S104-6.

S104-6: The UE determines whether the target signal strength difference (d) is greater than the target threshold (Th).

In some embodiments, the UE determines whether the conditions for handover from NR to LTE are met by comparing the target signal strength difference with the target threshold.

When the signal quality of the LTE cell A is significantly higher than the signal quality of the NR cell B, that is, when the target signal strength difference is greater than the target threshold, it is determined that the UE can hand over from NR to LTE, and the process proceeds to S106. When the signal quality of the LTE cell A is not significantly higher than the signal quality of the NR cell B, that is, when the target signal strength difference is less than or equal to the target threshold, it is determined that the UE does not need to hand over from NR to LTE, and the process proceeds to S105.

It may be understood that, the target threshold is different in different application scenarios. In this way, only when a difference between the signal quality of the LTE cell A and the signal quality of the NR cell B is greater in a call scenario compared with a non-call scenario, it can be determined that the UE needs to hand over from NR to LTE.

In this way, the UE can ensure to reduce the probability of handover from VONR to VOLTE during execution of the VONR call. In other words, the following situation is avoided: after the UE's ongoing call service drops from VONR to VOLTE, because the current network does not support the handover from VOLTE to VONR, the call service can only be conducted on LTE for the rest of time and the good sound quality of the VONR call cannot be enjoyed; and additionally, during the drop from VONR to VOLTE, the UE has a call drop risk. Therefore, this embodiment can improve the quality of call services and reduce the call drop rate.

In addition, the foregoing S104-1 to S104-6 are an example for the UE to evaluate whether the signals of the NR cell B and/or the LTE cell A meet the preset condition. As shown in S104-1 to S104-6, when the signal strength (or signal quality) of the NR cell B is greater than the threshold 1 and the target signal strength difference (d) is less than or equal to the target threshold, it is determined that the preset condition is met and the process proceeds to S105. When the signal strength (or signal quality) of the NR cell B is not greater than the threshold 1, or the target signal strength difference (d) is greater than the target threshold, it is determined that the preset condition is not met, and the process proceeds to S106.

S105: The UE skips reporting the MR of the event B2.

In some embodiments, when the signals of the NR cell B and/or the LTE cell A meet the preset condition, for example, as shown in FIG. 5, when the signal strength (signal quality) of the NR cell B is greater than the threshold 1 and the target signal strength difference (d) is less than or equal to the target threshold (Th), it indicates that the signal of the NR cell B currently can support the UE to execute a communication service normally, and the signal of the LTE cell A is not significantly better than that of the NR cell B. In other words, there is no need to hand over to the LTE cell A currently. Accordingly, the UE may skip reporting the MR of the event B2, and the process ends.

For example, the UE may skip reporting the MR of the event B2 by suppressing generation of the corresponding MR of the event B2. In another example, the UE may alternatively skip reporting the MR of the event B2 by suppressing reporting of the MR of the event B2 to the NR cell B.

S106: The UE reports the MR of the event B2 to the NR cell B, where the MR indicates that the LTE cell A meets the report condition of the event B2.

In some embodiments, when the signals of the NR cell B and/or the LTE cell A do not meet the preset condition, the UE may generate an MR of the event B2 and report the MR to the NR cell B. In the MR of the event B2, the RSRP of the NR cell B being lower than the threshold value 1 and/or the RSRP of the LTE cell A being higher than the threshold value 2 is recorded. The MR may trigger the NR cell B to instruct the UE to transition to the LTE cell A. For details, reference may be made to S107.

For example, as shown in FIG. 5, when the signal strength (signal quality) of the NR cell B is less than or equal to the threshold 1, it indicates that the signal of the NR cell B currently cannot support the UE to execute a communication service normally. The UE may generate an MR of the event B2 and report the MR to the NR cell B.

In another example, as shown in FIG. 5, when the signal strength (signal quality) of the NR cell B is greater than the threshold 1, and the target signal strength difference between the LTE cell A and the NR cell B is greater than the target threshold, it indicates that the signal of the LTE cell A is significantly better than that of the NR cell B, and transitioning to the LTE cell A can ensure the communication quality. The UE may generate an MR of the event B2 and report the MR to the NR cell B. It may be understood that, S105 and S106 are two mutually exclusive steps. After the UE determines whether the signals of the NR cell B and/or the LTE cell A meet the preset condition, either S105 or S106 is performed. After S105 is performed, the process ends; or after S106 is performed, the process proceeds to S107.

S107: The NR cell B instructs, according to the MR of the event B2, the UE to hand over to the LTE cell A.

For example, the NR cell B may send handover indication information to the UE.

S108: The UE accesses the LTE cell A in a random access (random access, Rach) manner and establishes a radio resource control (Radio Resource Control, RRC) connection with the LTE cell A.

S109: After the RRC connection is established, the UE sends a tracking area update (tracking area update, TAU) request to the LTE cell A, to request execution of a TAU process.

For implementation details of S107 to S109, reference may be made to S3 to S6 in the foregoing embodiments, and details are not described herein again.

A mobile phone 1 and a mobile phone 2 to which the foregoing method is applied are used as an example. The mobile phone 1 is in a call state, and the mobile phone 2 is in a non-call state. The mobile phone 1 and the mobile phone 2 are in the same location, in which the NR cell B and the LTE cell A can be detected, and the two mobile phones both camp on the NR cell B. In addition, in the event B2 configured within the NR cell B, the serving cell corresponds to the threshold value 1, and the inter-system neighboring cell corresponds to the threshold value 2.

In an exemplary scenario 1, the RSRP of the NR cell B scanned by both of the mobile phone 1 and the mobile phone 2 is less than the threshold value 1 and greater than the threshold 1. When the difference between the RSRP of the LTE cell A and the RSRP of the NR cell B is less than or equal to the threshold 3, the mobile phone 1 and the mobile phone 2 continue to camp on the NR cell B.

In an exemplary scenario 2, the RSRP of the NR cell B scanned by both of the mobile phone 1 and the mobile phone 2 is less than the threshold value 1 and greater than the threshold 1. When the difference between the RSRP of the LTE cell A and the RSRP of the NR cell B is greater than the threshold 3 and less than or equal to the threshold 2, the mobile phone 2 transitions from the NR cell B to the LTE cell A, and the mobile phone 1 continues to camp on the NR cell B.

In an exemplary scenario 3, the RSRP of the NR cell B scanned by both of the mobile phone 1 and the mobile phone 2 is less than the threshold value 1 and greater than the threshold 1. When the difference between the RSRP of the LTE cell A and the RSRP of the NR cell B is greater than the threshold 2, both the mobile phone 1 and the mobile phone 2 transition from the NR cell B to the LTE cell A.

In some other embodiments, a plurality of groups of thresholds 1, thresholds 2, and thresholds 3 may be configured in the UE. During a period in which the UE camps on an NR cell, a different threshold 1, threshold 2, and threshold 3 may be dynamically used to evaluate whether it is necessary to transition from NR to LTE.

In some embodiments, thresholds 1, thresholds 2, and thresholds 3 corresponding to different scenarios may be pre-configured in the UE. The scenarios may include geographical scenarios (for example, road sections), cell scenarios (for example, serving cells and neighboring cells with different configurations), and the like.

For example, thresholds 1, thresholds 2, and thresholds 3 corresponding to different high-speed railway sections may be configured in the UE. For example, an NR coverage effect is better than an LTE coverage effect on a high-speed railway section 1 from a location A to a location B, and the LTE coverage effect is better than the NR coverage effect on a high-speed railway section 2 from the location B to a location C. The threshold 1, threshold 2, and threshold 3 corresponding to the high-speed railway section 1 pre-configured in the UE are different from the threshold 1, threshold 2, and threshold 3 corresponding to the high-speed railway section 2. For example, the threshold 1 corresponding to the high-speed railway section 1 is lower than the threshold 1 corresponding to the high-speed railway section 2, the threshold 2 corresponding to the high-speed railway section 1 is higher than the threshold 2 corresponding to the high-speed railway section 2, and/or the threshold 3 corresponding to the high-speed railway section 1 is higher than the threshold 3 corresponding to the high-speed railway section 2.

For example, thresholds 1, thresholds 2, and thresholds 3 corresponding to NR cells of different bands (band) and LTE cells of different bands may be configured in the UE.

For example, thresholds 1, thresholds 2, and thresholds 3 corresponding to different duplex manners may be configured in the UE.

For example, a threshold 1, a threshold 2, and a threshold 3 corresponding to time division duplexing (time division duplexing, TDD) are configured in the UE; and a threshold 1, a threshold 2, and a threshold 3 corresponding to frequency division duplexing (frequency division duplexing, FDD) are also configured in the UE. The plurality of groups of thresholds 1, thresholds 2, and thresholds 3 listed above may differ.

In other possible examples, thresholds 1, thresholds 2, and thresholds 3 corresponding to different high-speed railway sections, NR cell bands, LTE cell bands, and/or duplex manners of the UE are further configured in the UE.

In this way, the UE may determine, based on a real-time recognized scenario, a threshold 1, a threshold 2, and a threshold 3 that need to be configured. Subsequently, based on the determined threshold 1, threshold 2, and threshold 3, whether it is necessary to transition from the NR cell to the LTE cell is evaluated.

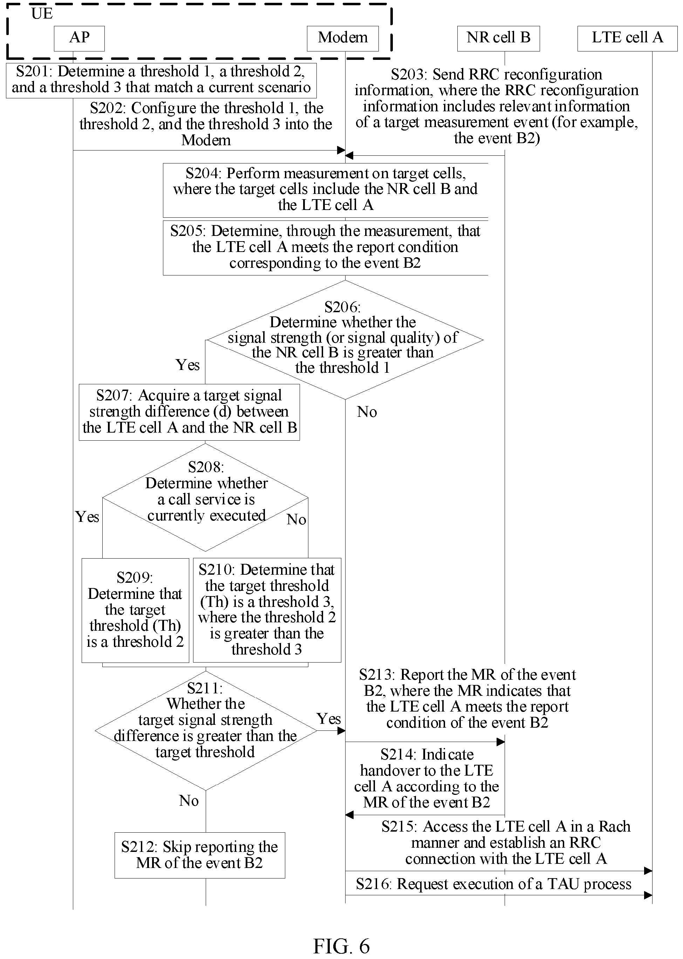

As shown in FIG. 6, the UE includes an application processor (application processor, AP) and a modem (Modem). The UE is located within the coverage of the NR cell B and the LTE cell A, and the UE accesses the NR cell B, that is, when the NR cell B is the serving cell of the UE, the foregoing method may further include:
S201: The AP determines a threshold 1, a threshold 2, and a threshold 3 that match a current scenario.

In some embodiments, the AP may acquire current location information of the UE, travel information of the user, an operating state of the UE, a band corresponding to the NR cell B, a band corresponding to the LTE cell A, and/or the duplex mode corresponding to the UE.

Subsequently, the matching threshold 1, threshold 2, and threshold 3 are searched based on the location information, the travel information of the user, the operating state of the UE, the band corresponding to the NR cell B, the band corresponding to the LTE cell A, and/or the duplex mode corresponding to the UE.

For example, when an acquired current location is within a geo-fence of a high-speed railway station or a high-speed railway section, and the travel information contains high-speed railway-related content (for example, a high-speed railway ticket that has not expired), the UE searches for a threshold 1, a threshold 2, and a threshold 3 corresponding to the high-speed railway section, and the process proceeds to S202.

In another example, when an acquired current location is within a geo-fence of a high-speed railway station or a high-speed railway section, and the operating state indicates that the UE is in a high-speed moving state, the UE searches for a threshold 1, a threshold 2, and a threshold 3 corresponding to the high-speed railway section, and the process proceeds to S202.

In another example, the matching threshold 1, threshold 2, and threshold 3 are found based on the band corresponding to the NR cell B and the band corresponding to the LTE cell A, and the process proceeds to S202.

In another example, the matching threshold 1, threshold 2, and threshold 3 are found based on the duplex manner corresponding to the UE, and the process proceeds to S202.

In another example, the matching threshold 1, threshold 2, and threshold 3 are found based on the high-speed railway section corresponding to the current location, the band of the NR cell, the band of the LTE cell, and/or the duplex manner corresponding to the UE, and the process proceeds to S202.

S202: The AP configures the threshold 1, the threshold 2, and the threshold 3 into the Modem.

In some embodiments, the AP may periodically perform S201 above. Each time a group of threshold 1, threshold 2, and threshold 3 is determined, the process proceeds to S202. If no matching threshold 1, threshold 2, and threshold 3 are determined, S201 continues to be performed.

S203: The NR cell B sends RRC reconfiguration information to the Modem, where the RRC reconfiguration information includes relevant information of the target measurement event (for example, the event B2).

In some embodiments, there is no necessary order between S203 and S201. The AP of the UE dynamically determines the threshold 1, threshold 2, and threshold 3 adapted to the current scenario through S201 and S202, and configures the thresholds in the Modem. The Modem may perform subsequent steps based on the most recently received threshold 1, threshold 2, and threshold 3.

In another embodiment, steps S201 and S202 may be performed without the AP. The threshold 1, threshold 2, and threshold 3 may be pre-configured in the Modem, so that the entire method process of this embodiment can be performed entirely by the Modem.

S204: The Modem performs measurement on the target cells, where the target cells include the NR cell B and the LTE cell A.

S205: The Modem determines, through the measurement, that the LTE cell A meets the report condition corresponding to the event B2.

For implementation details of S203 to S205, reference may be made to S101 to S103 in the foregoing embodiments.

S206: The Modem determines whether the signal strength of the NR cell B is greater than the threshold 1.

When the signal strength of the NR cell B is greater than the threshold 1, the process proceeds to S207. When the signal strength of the NR cell B is less than or equal to the threshold 1, the process proceeds to S213.

S207: The Modem acquires the target signal strength difference (d) between the LTE cell A and the NR cell B.

For example, when the Modem determines that the signal strength of the NR cell B is greater than the threshold 1, the RSRP of the NR cell B is subtracted from the RSRP of the LTE cell A to obtain the corresponding target signal strength difference (d).

S208: The Modem determines whether a call service is currently executed.

If a call service is executed, the process proceeds to S209. If no call service is executed, the process proceeds to S210.

S209: The Modem determines that the target threshold (Th) is the threshold 2.

S210: The Modem determines that the target threshold is the threshold 3.

After the Modem performs S209 or S210, the process proceeds to S211. That is, if a call service is executed, the Modem performs S209; and after completion of S209, the process skips S210 and proceeds to S211. If no call service is executed, the Modem skips S209 and performs S210. After completion of S210, the process proceeds to S211.

S211: The Modem determines whether the target signal strength difference (d) is greater than the target threshold (Th).

When the target signal strength difference (d) is greater than the target threshold (Th), the process proceeds to S213. When the target signal strength difference (d) is less than or equal to the target threshold (Th), the process proceeds to S212.

In some embodiments, the foregoing S206 to S211 are an example for the UE to evaluate whether the signals of the NR cell B and/or the LTE cell A meet the preset condition, and are not intended to be specific limitations. In addition, for implementation details, reference may be made to S104 of the foregoing embodiments.

S212: The Modem skips reporting the MR of the event B2.

In some embodiments, when the signal strength of the NR cell B is greater than the threshold 1 and the target signal strength difference (d) is less than or equal to the target threshold (Th), the MR of event B2 will not be reported, to avoid triggering the NR cell B to instruct the UE to transition to the LTE cell A, and the process ends.

S213: The Modem reports the MR of the event B2 to the NR cell B, where the MR indicates that the LTE cell A meets the report condition of the event B2.

In the reported MR, the following content is recorded: the RSRP of the NR cell B is lower than the threshold value 1 (first threshold value) and/or the RSRP of the LTE cell A is higher than the threshold value 2 (second threshold value), which may trigger the NR cell B to instruct the UE to transition to the LTE cell A. The foregoing S212 and S213 are two mutually exclusive steps. After the Modem determines whether the preset condition is met, either S212 or S213 is performed.

In some embodiments, when the signal strength of the NR cell B is less than or equal to the threshold 1, the Modem reports the MR of the event B2 to the NR cell B.

In some other embodiments, when the signal strength of the NR cell B is greater than the threshold 1, and the target signal strength difference (d) is greater than the target threshold (Th), the Modem may also report the MR of the event B2 to the NR cell B.

S214: The NR cell B instructs, according to the MR of the event B2, the UE to hand over from the NR cell B to the LTE cell A.

S215: The Modem accesses the LTE cell A in a random access (random access, Rach) manner and establishes a radio resource control (Radio Resource Control, RRC) connection with the LTE cell A.

S216: After the RRC connection is established, the Modem sends a tracking area update (tracking area update, TAU) request to the LTE cell A, to request execution of a TAU process.

In some embodiments, for implementation details of S212 to S216, reference may be made to S105 to S109 in the foregoing embodiments.

In other possible embodiments, after the UE determines that the LTE cell meets the report condition corresponding to the target measurement event, the UE may continue to determine whether the RSRP of the current serving cell is greater than the threshold 1. If the RSRP of the serving cell is greater than the threshold 1, the MR of the target measurement event is suppressed. If the RSRP of the serving cell is less than or equal to the threshold 1, the MR of the target measurement event is reported to the serving cell.

In other possible embodiments, after determining that the LTE cell meets the report condition corresponding to the target measurement event, the UE may also acquire the corresponding target signal strength difference (d), and suppress the MR of the target measurement event when the target signal strength difference (d) is less than or equal to the current target threshold. When the target signal strength difference (d) is greater than the current target threshold, the MR of the target measurement event is reported to the serving cell.

A user carrying a mobile phone to take a high-speed train is used as an example. The user's travel information indicates that the high-speed train taken by the user will pass through a high-speed railway section 1 and a high-speed railway section 2 in sequence. On the high-speed railway section 1, the NR coverage effect is better than the LTE coverage effect, while on the high-speed railway section 2, the LTE coverage effect is better than the NR coverage effect. In this way, when passing through the high-speed railway section 2, it is easier for the mobile phone to hand over from a VONR call being executed to a VOLTE call compared to a period of passing through the high-speed railway section 1.

In some embodiments, when the UE determines that a first condition is met currently, the UE may also report a measurement report corresponding to the event B to the cell A. The first condition may be that the cell A meets the report condition of the event B, and a signal value of the cell B is less than or equal to the first threshold.

When the UE determines that a second condition and a third condition are met currently, the UE may also report the measurement report corresponding to the event B to the cell A. The second condition may be that the cell A meets the report condition of the event B, and the signal value of the cell B is greater than the threshold 1. The third condition may be that: the UE is currently in a call service, and a difference between a signal value of the cell A and the signal value of the cell B is greater than the second threshold; or the UE is not currently in a call service, and the difference between the signal value of the cell A and the signal value of the cell B is greater than the third threshold.

When the UE determines that the second condition is met but the third condition is not met currently, the UE suppresses reporting of the measurement report of the event B to the network side.

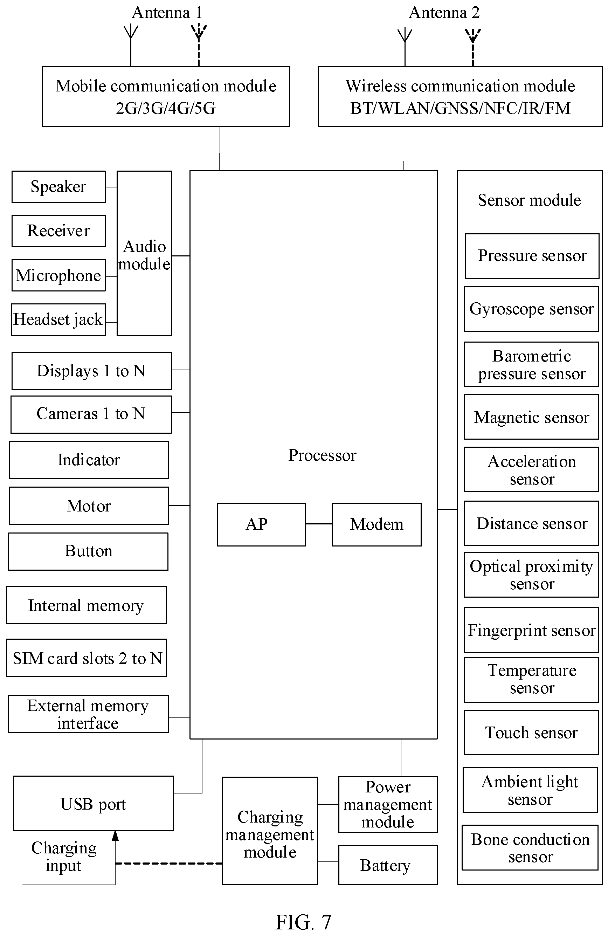

In some embodiments, FIG. 7 shows a hardware structure of a UE. As shown in FIG. 7, the UE may include a processor, an external memory interface, an internal memory, a universal serial bus (Universal Serial Bus, USB) port, a charging management module, a power management module, a battery, an antenna 1, an antenna 2, a mobile communication module, a wireless communication module, a sensor module, a button, a motor, an indicator, a camera, a display, a SIM card slot, and the like. The audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structures illustrated in embodiments of this application do not constitute a specific limitation on the UE. In some other embodiments, the UE may include more or fewer components than those shown in the figure, or some components may be combined, or some components may be split, or a different component deployment may be used. The components in the portrait may be implemented by hardware, software, or a combination of software and hardware.

The processor may include one or more processing units. For example, the processor may include an application processor (Application Processor, AP), a modem (Modem, also referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU). Different processing units may be separate devices, or may be integrated into one or more processors. The processor is a nerve center and a command center of the UE. The controller may generate an operation control signal based on instruction operation code and a timing signal, and control obtaining and executing of instructions.

A wireless communication function of the UE may be implemented through the antenna 1, the antenna 2, the mobile communication module, the wireless communication module, the modem, and the like. In some embodiments, in the UE, the antenna 1 is coupled to the mobile communication module, and the antenna 2 is coupled to the wireless communication module, so that the UE may communicate with a network side device and another terminal through a wireless communication technology.

In addition, an operating system runs on the foregoing components. The operating system may be an Android open source operating system, a Windows operating system, another possible operating system, or the like.

The operating system of the UE may use a layered architecture, an eventdriven architecture, a microcore architecture, a microservice architecture, or a cloud architecture. In this embodiment of this application, an Android system with a layered architecture is used as an example to illustrate a software and hardware structure of the UE. It is to be noted that, although the embodiments of this application are described by using the Android system as an example, the basic principle thereof is also applicable to a UE based on another operating system.

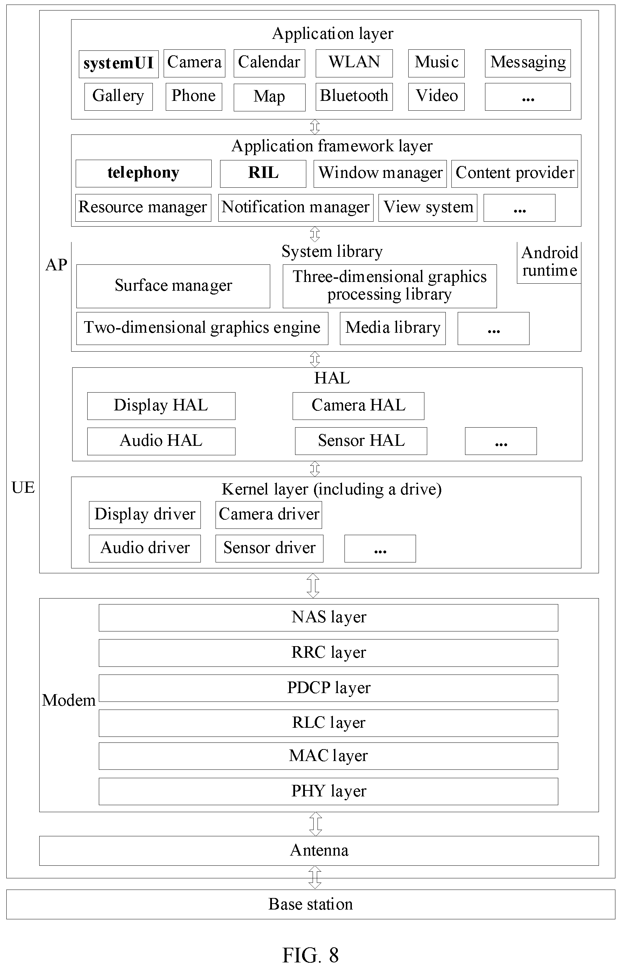

FIG. 8 is a block diagram of a software structure of the UE. The software structure uses a layered architecture. In the layered architecture, software is divided into multiple layers, and each layer has a clear role and task. The layers communicate with each other by using a software interface. An Android system running on an AP is used as an example. In some embodiments, the Android system is divided into five layers that are respectively an application layer, an application framework layer (Framework), an Android runtime (Android runtime) and system library, a hardware abstraction layer (HAL), and a system kernel layer (Kernel) from top to bottom.

The application layer may include a series of application packages. The application package may include APPs such as Camera, Gallery, Calendar, Calls, Map, WLAN, Bluetooth, Music, Videos, and Messages The application layer may further include a systemUI (a system UI). The systemUI is configured to display an interface of the UE, for example, display a signal icon corresponding to a SIM card, and display a call interface. The application program framework layer provides an application programming interface (application programming interface, API) and a programming framework for the application program at the application program layer. The application framework layer includes some predefined functions. For example, the application framework layer may include a window manager, a content provider, a view system, a phone manager, a resource manager, a notification manager, and the like. The phone manager is configured to provide a communication function of the UE, for example, call status management (including answering, hanging up, and the like). The phone manager is represented by telephony in FIG. 8. The application framework layer may further include a RIL (Radio Interface Layer, radio interface layer). A modem (modem) may exchange information with the telephony by using the RIL.

The system library may include a surface manager, a three-dimensional image processing library, a two-dimensional graphics engine, a media library, and the like. The HAL layer may include a display HAL, a camera HAL, an audio HAL, a sensor HAL, and the like. The kernel layer includes a display drive, a camera drive, an audio drive, a sensor drive, and the like.

The modem may include a NAS (Non-Access Stratum, non-access stratum) layer, an RRC (radio resource control, radio resource control) layer, a packet data convergence protocol (Packet Data Convergence Protocol, PDCP) layer, a radio link control (Radio Link Control, RLC) layer, a medium access control (Medium Access Control Layer, MAC) layer, and a physical (Physical, PHY) layer. The foregoing layers may be software modules. The Modem may interact with a base station through an antenna.

In addition, some embodiments of this application provide an electronic device. The electronic device includes: one or more processors and a memory. The memory is configured to store computer program code. The computer program code includes computer instructions. When the one or more processors execute the computer instructions, the electronic device is caused to perform the foregoing method.

Some embodiments of this application provide a chip system, applied to a terminal. The chip system includes at least one processor and an interface. The interface is configured to receive instructions, and transmit the instructions to the at least one processor. The at least one processor runs the instructions, so that the terminal performs the foregoing method. The chip system may be a Modem, and the foregoing method may be implemented by a Modem. In some other embodiments, the chip system may alternatively be a system on chip (System on Chip, Soc) including the Modem and the AP. The foregoing method may be implemented by the AP and the Modem.

In some embodiments, through the descriptions of the foregoing implementations, a person skilled in the art may clearly understand that, for the purpose of convenient and brief description, only division of the foregoing functional modules is used as an example for description. In actual application, the foregoing functions may be allocated to and completed by different functional modules according to requirements. That is, an inner structure of an apparatus is divided into different functional modules to complete all or some of the functions described above. For a detailed working process of the foregoing system, apparatus, and unit, reference may be made to a corresponding process in the foregoing method embodiments, and details are not described herein again.

In the embodiments of this application, functional units in the embodiments may be integrated into one processing unit, or each of the units may exist alone physically, or two or more units are integrated into one unit. The integrated unit may be implemented in the form of hardware, or may be implemented in a form of a software functional unit.

If the integrated unit is implemented in the form of a software functional unit and sold or used as an independent product, the integrated unit may be stored in a computer-readable storage medium. Based on such an understanding, the technical solutions of embodiments of this application essentially, or the part contributing to a conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the method described in embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A method for a call, comprising:
receiving, by a UE, RRC reconfiguration information from a first network device, wherein the RRC reconfiguration information comprises a report condition corresponding to a target measurement event, the report condition is a condition that needs to be met by signal strength of a first signal and/or a second signal, the first signal is a radio signal sent by the first network device of a first network standard, and the second signal is a radio signal sent by a second network device of a second network standard, wherein the first network standard is superior to the second network standard; and
suppressing, by the UE, reporting of a measurement report of the target measurement event to the first network device when the first signal and/or the second signal detected by the UE meet the report condition, and a preset condition is met, wherein
the preset condition comprises one or more of the following:
the signal strength of the first signal is greater than a first threshold; or
a target signal strength difference is less than or equal to a target threshold, and the target signal strength difference is a difference between the signal strength of the second signal and the signal strength of the first signal.

2. The method according to claim 1, wherein
when the UE is executing a call service, the target threshold is a second threshold; or
when the UE is not executing a call service, the target threshold is a third threshold; and the second threshold is greater than the third threshold.

3. The method according to claim 1 or 2, further comprising:
reporting, by the UE, the measurement report of the target measurement event to the first network device when the first signal and/or the second signal detected by the UE meet the report condition, and the preset condition is not met; and
performing, by the UE, handover from the first network device of the first network standard to the second network device of the second network standard in response to handover indication information of the first network device.

4. The method according to any one of claims 1 to 3, wherein the first network standard is NR, and the second network standard is LTE.

5. The method according to any one of claims 1 to 4, further comprising one or more of the following:
a value of the first threshold is related to one or more of the following: current location information of the UE, travel information configured in the UE, a motion state of the UE, a band of the first network device, a band of the second network device, or a duplex mode enabled by the UE;
a value of the second threshold is related to one or more of the following: the current location information of the UE, the travel information configured in the UE, the motion state of the UE, the band of the first network device, the band of the second network device, or the duplex mode enabled by the UE; or
a value of the third threshold is related to one or more of the following: the current location information of the UE, the travel information configured in the UE, the motion state of the UE, the band of the first network device, the band of the second network device, or the duplex mode enabled by the UE.

6. The method according to any one of claims 1 to 5, wherein the target measurement event is an event B.

7. The method according to any one of claims 1 to 6, wherein the target measurement event is an event B2, and the report condition comprises that:
the signal strength of the detected first signal is less than a first threshold value, and the signal strength of the detected second signal is greater than a second threshold value; and the first threshold value is greater than the first threshold.

8. A method for a call, comprising:
camping, by a UE, on a cell B of a first network standard;
receiving, by the UE, an RRC reconfiguration message sent by a network side, wherein a report condition of an event B is configured in the RRC reconfiguration message;
reporting, by the UE, a measurement report of the event B to the network side when a first condition is met, wherein the first condition comprises that: a cell A of a second network standard meets the report condition of the event B, and a signal value of the cell B is less than or equal to a first threshold, wherein the first network standard is superior to the second network standard;
reporting, by the UE, the measurement report of the event B to the network side when a second condition and a third condition are met; or
suppressing, by the UE, reporting of the measurement report of the event B to the network side when the second condition is met but the third condition is not met, wherein
the second condition comprises that: the cell A meets the report condition of the event B, and the signal value of the cell B is greater than the threshold 1; and
the third condition comprises that: the UE is currently in a call service, and a difference between a signal value of the cell A and the signal value of the cell B is greater than a second threshold; or the UE is not currently in a call service, and the difference between the signal value of the cell A and the signal value of the cell B is greater than a third threshold, wherein the second threshold is greater than the third threshold.

9. An electronic device, comprising: a processor and a memory, wherein
the memory stores computer-executable instructions; and
the processor executes the computer-executable instructions stored in the memory, to enable the electronic device to perform the method according to any one of claims 1 to 8.

10. A chip system, comprising at least one processor and a communication interface, wherein the communication interface and the at least one processor are interconnected through a line, and the at least one processor is configured to run a computer program or instructions, to perform the method according to any one of claims 1 to 8.
